# EUROPEAN PATENT SPECIFICATION

(11) **EP 0 253 324 B1**
(45) Date of publication and mention of the grant of the patent: **13.03.1996**
(21) Application number: 87109975.0
(22) Date of filing: 10.07.1987
(51) Int. Cl.: B01D 53/34, B01D 53/50, F23C 6/04, F23J 7/00

(54) **Method and apparatus for reducing sulphur dioxide content in flue gases**
Verfahren und Vorrichtung, um Schwefeldioxyd in Rauchgasen zu reduzieren
Procédé et dispositif pour réduire l'anhydride sulfureux contenu dans des gaz de fumée

(30) Priority: 14.07.1986 US 885463; 20.01.1987 US 4644
(43) Date of publication of application: 20.01.1988
(60) Divisional application: 91112744.7
(73) Proprietor: INLAND STEEL COMPANY, Chicago, IL 60603 (US)
(72) Inventor: Landreth, Ronald R., Crown Point, IN 46307 (US); Anderson, Lee R., Griffith, IN 46319 (US)
(74) Representative: Leach, John Nigel

(56) References cited:
- EP-A- 0 134 040
- EP-A- 0 156 784
- DE-A- 3 206 409
- DE-A- 3 428 502
- DE-A- 3 441 726
- GB-A- 2 157 192
- US-A- 3 481 289
- US-A- 4 655 148
- Perry's Chemical Engineers Handbook, 5th Edition, McGraw Hill, New York, 1973 pages 5-46, 5-47

## Description

### Background of the Invention

The present invention relates generally to the removal of pollutants from flue gases and more particularly to a method and apparatus for removing sulfur dioxide from flue gases exhausted from boilers fired with sulfur-containing fuel.

Sulfur-containing fuels, such as coal, coke oven gas or fuel oil, are typically used to fire boilers for producing steam to generate electricity and/or for heating or processing purposes. Typically, the fuel is combusted with air, in excess of the stoichiometric amount required for combustion, at a series of burners in an enclosed combustion chamber to produce combustion reaction products consisting primarily of hot gases but also containing some particulates, such as fly ash. Heat is extracted from the hot gases, in a conventional manner, to heat water and produce steam. The hot gases are flowed in a downstream direction and eventually are exhausted through a stack. Residual heat remaining in the hot gases, after completion of the steam producing function, may be used to preheat combustion air.

In the combustion chamber, the temperature decreases in a downstream direction after the last burner. Moreover, at any location along the downstream path there can be a spread of different processing temperatures across the lateral dimensions of the combustion zone. However, at any such location, there is also an average temperature, and the average temperature is the temperature reference used herein, unless otherwise indicated.

The hot gases from the combustion reaction include undesirable pollutants, both solid and gaseous. Solid particulate pollutants are usually removed in an electrostatic precipitator or a bag house or both. Gaseous pollutants have included oxides of nitrogen (NOₓ) and sulfur dioxide (SO₂). Within the last few years, the NOₓ content of the gases has been reduced by changes in combustion techniques for oil and gas-fired boilers and by changes in burner design for coal-fired boilers.

A high sulfur dioxide content in the gases is especially undesirable because, if allowed to escape into the atmosphere, it can be a source of acid rain as well as other undesirable effects.

Attempts have been made to reduce the sulfur dioxide content of the combustion reaction gases (flue gases) by an expedient known as dry sorbent injection. A sorbent is a compound which reacts with the sulfur dioxide to produce a relatively innocuous, solid compound which can be removed from the flue gases with conventional particulate removal apparatus. Examples of dry injection sorbent materials previously employed to remove sulfur dioxide from flue gases resulting from the combustion of coal include the carbonates or hydroxides of magnesium and calcium. Limestone (calcium carbonate) particles have been employed as a dry sorbent injection material in coal fired boilers. In such a system, the sulfur dioxide in the flue gases is converted to calcium sulfate, an innocuous solid compound which can be employed as a construction material or which may be buried in a land fill without concern for adverse effects on the environment. Initially, the particles of limestone or calcium carbonate (CaCO₃) are calcined into lime (CaO) by the heat from the combustion reaction, and the lime reacts with the sulfur dioxide, in the presence of oxygen (from the excess air in the combustion chamber) to produce calcium sulfate (CaSO₄).

As noted above, oxides of nitrogen in the flue gases have been reduced by employing an improved burner design. Such a burner design generally includes a nozzle through which the fuel is injected into the combustion chamber together with so-called primary air. Also injected into the combustion chamber, at locations closely adjacent the fuel nozzle, is secondary air which, together with the primary air, accounts for about 0.7-1.0 times the stoichiometric amount of oxygen required for complete combustion. In addition to the primary and secondary air, tertiary air is also injected into the combustion chamber from locations either closely surrounding, or remotely spaced in a downstream direction from, the inlets for the secondary air.

Employing a burner arrangement of the type described in the preceding paragraph reduces or eliminates peak flame temperatures, the presence of which accounts for oxides of nitrogen produced from nitrogen in the combustion air. The aforementioned burner arrangement also reduces the oxygen concentration in the pyrolysis or chemical reaction zone of the flame, which controls the formation of oxides of nitrogen from the nitrogen contained in the fuel.

Attempts have been made by others, at least on a test basis, to inject limestone particles in a system employing burners of the type producing a low percentage of oxides of nitrogen, hereinafter referred to as low NOₓ burners. In these attempts, limestone has been injected into the combustion chamber through the fuel nozzles, through the inlets for introducing the secondary air (located closely adjacent the fuel nozzle), through tertiary air inlets closely surrounding the inlets for the secondary air, and through separate limestone-injecting inlets spaced relatively far downstream from the inlets for the fuel and the combustion air. In the first three instances, the limestone was premixed with the fuel and/or the combustion air entering the combustion chamber at the secondary and tertiary air inlets.

There are drawbacks to all of the limestone injection techniques described in the preceding paragraph. Injection through the fuel nozzle or through secondary air inlets immediately adjacent the fuel nozzle or through tertiary air inlets closely surrounding the secondary air inlets subjects the limestone particles to relatively high temperatures for relatively long periods of time, and this can cause sintering of the resulting lime particles which reduces their surface area and therefore their ability to react with SO₂, thereby decreasing SO₂ removal. Introducing the limestone particles relatively far downstream from the fuel nozzles and combustion air inlets decreases SO₂ removal because the temperature conditions are too low and/or decrease too rapidly.

Premixing the limestone particles with the combustion air causes erosion and pluggage problems in the transporting conduits for the combustion air and reduces substantially the accuracy with which the particles can be divided among the sub-streams to the individual air outlets, a multiplicity of which are usually employed. These problems arise from the high velocity at which the combustion air flows through the transporting conduits, e.g. 2,500-5,000 ft/min. (762-1524 m/min.) and the fact that the limestone particles are carried in dilute phase transport.

If the velocity of the transporting combustion air is reduced to decrease the erosion and pluggage problems, the volume of the transporting air has to be increased in order to carry the limestone in dilute phase transport at the slower speeds; and this could result in more combustion air at a given outlet, or series of outlets, than is desired from the standpoint of combustion or other considerations. Moreover, lowering the velocity at which the combustion air is introduced into the combustion chamber reduced the turbulence and mixing action due to the combustion air, and such a reduction is undesirable. Furthermore, a minimum velocity is necessary in order for the combustion air to properly distribute within the combustion chamber the limestone particles carried by the combustion air.

EP-A-134 040 discloses a combustion process and apparatus in which a mixture of solid particles and carrier air are in the form of a suspension having a low solids to gas ratio (dilute phase).

Such a dilute phase is to be distinguished from mixtures with high solids to gas ratio (dense phase) as explained in "Perry's Chemical Engineers Handbook, 5th edition, McGraw Hill, New York, 1973, pages 5-46 and 5-47".

DE-A-3 441 726 discloses an apparatus with the features of the preamble of Claim 5 and a corresponding process but is concerned with the potential of the combustion gas to achieve chemical bonding of additive and sulfur and not with any distribution capability of the combustion gas.

The above mentioned three references do not address the problem which this invention seeks to overcome.

The invention as claimed in Claims 1 and 5 is intended to provide a combustion process and apparatus for removing sulfur dioxide from flue gases in which the above described problems are overcome or are reduced.

Other advantages are inherent in the process and apparatus claimed and disclosed or will become apparent to those skilled in the art from the following detailed description in conjunction with the accompanying diagrammatic drawings.

### Brief Description of the Drawings

Fig. 1 is a vertical sectional view of an embodiment of an apparatus employed in accordance with the present invention; and
Fig. 2 is an enlarged, fragmentary view of a portion of the apparatus shown in Fig. 1.

### Detailed Description

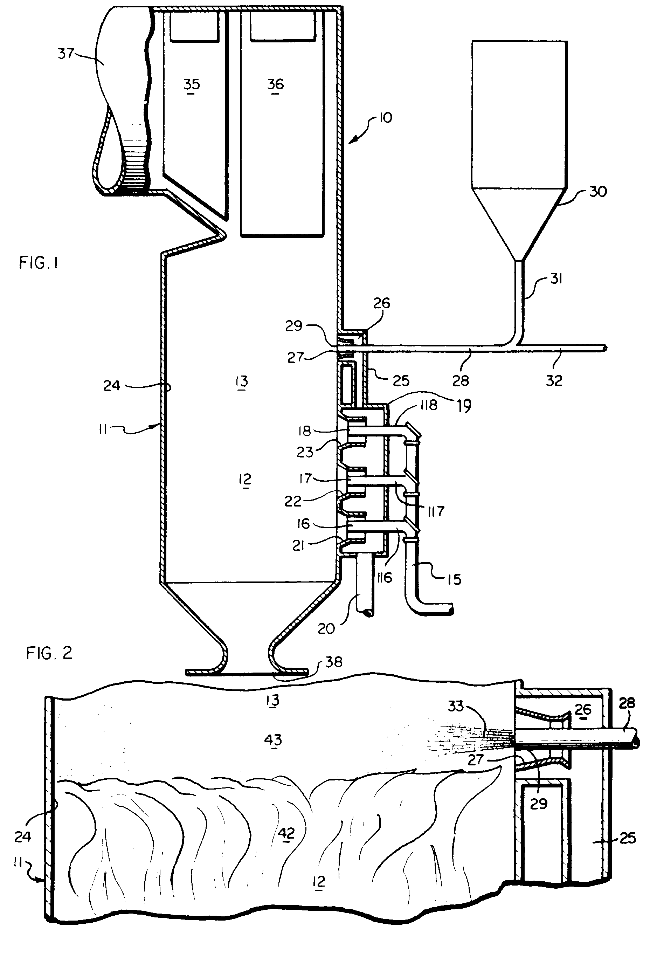

Referring initially to Fig. 1, indicated generally at 10 is an embodiment of a boiler for combusting fuel to heat water to generate steam. The embodiment illustrated in Fig. 1 is vertically disposed. Boiler 10 comprises a combustion chamber indicated generally at 11 having first and second combustion zones 12, 13 respectively. Combustion chamber 11 is defined by heat exchange walls 24 on the opposite side of which water is flowed, in a conventional manner, for absorbing heat from combustion chamber 11 generated therein by a combustion reaction. For example, heat exchange walls 24 can be a ring of vertical tubes through which water is flowed.

Communicating with first combustion zone 12 are a plurality of vertically spaced nozzle 16, 17, 18 for introducing fuel and primary air into first combustion zone 12. A line 15 communicates with each of nozzles 16, 17, 18 through respective branch lines 116, 117 and 118 for introducing fuel and primary air into the nozzles. Located adjacent nozzles 16, 17, 18, around the nozzles, are respective ports 21, 22, 23 for introducing secondary air into the combustion chamber. Typically, there are two nozzles and two ports at each vertical level in Fig. 1, for a total of six of each. Ports 21-23 communicate with a pressurized wind box 19 in turn communicating with the upstream end of a conduit 20 for introducing preheated air into wind box 19.

Communicating with an upstream end of wind box 19 is a conduit 25 for conducting preheated air into a wind box extension 26 communicating with a series of peripherally spaced tubular ports 27 for introducing tertiary air into second combustion zone 13. Only one port 27 is shown in Fig. 1, but there are typically six such ports at the same vertical level. Second combustion zone 13 and tubular port 27 are spaced above all of the nozzles 16-18 and are relatively remote therefrom in a downstream direction.

Disposed substantially coaxially within tubular port 27 is a pipe 28 terminating at an open downstream end 29. Pipe 28 is employed to inject limestone particles into the stream of tertiary air as the stream enters second combustion zone 13. There is no premixing of the limestone particles in pipe 28 with tertiary air before the particles enter second combustion zone 13 at pipe end 29.

In a typical embodiment employing six peripherally spaced tertiary air ports 27, a pipe 28 may be associated with four of the six ports. Introducing the limestone particles through four peripherally spaced ports 27 assists in the widespread horizontal distribution of limestone particles in second zone 13 compared to introduction through only one or two ports.

The limestone particles are stored in a hopper 30 which feeds into a conduit 31 extending downwardly from hopper 30 to line 28. Communicating with pipe 28 is a conduit 32 through which flows a transport gas for transporting the limestone particles from hopper 30 through pipe 28.

Limestone particles are the preferred material for producing lime particles by calcination in the combustion chamber. Other finely divided materials, which form lime particles upon exposure to the heat in the second combustion zone, may be employed. These include calcium hydroxide, Ca(OH)₂, and dolomite, CaMg(CO₃)₂, which calcines to produce a reaction product which is about 80 wt.% lime and 20 wt.% MgO. The MgO does not usually participate in SO₂ removal to any substantial degree in the method of the present invention.

Combustion reaction gases are generated in combustion chamber 11 and flow upwardly (downstream) past primary and secondary superheaters 35, 36 respectively for superheating the steam generated at boiler 10. The combustion reaction gases, or flue gases, then flow downstream through a conduit 37 which communicates with conventional apparatus (not shown) for removing particulates from the flue gas and with conventional heat exchange apparatus (not shown) for preheating the air which is eventually flowed through conduit 20 and line 15. Eventually, the cooled, cleaned flue gases are exhausted into the atmosphere through a stack (not shown).

Located at the bottom of boiler 10 is an opening 38 for removing ash particles generated during the combustion reaction within chamber 11.

In accordance with the present invention, a mixture of primary air and a sulfur-containing fuel are flowed through line 15 into nozzles 16-18. The sulfur-containing fuel may be coal, fuel oil, or coke oven gas, for example. The total amount of primary, secondary and tertiary air is in excess of the stochiometric amount required to combust the fuel introduced through nozzles 16-18. Typically, there is enough air to provide an oxygen content about 3% greater than the stoichiometric quantity required to combust all the fuel.

A major portion of the combustion air is introduced into first combustion zone 12, through nozzles 16-18 and ports 21-23, together with or closely adjacent the fuel to at least partially combust the fuel. A second portion of air, constituting the remainder of the air or tertiary air, is introduced as overfire air into the combustion chamber at second zone 13 through port 27.

At least some combustion occurs in first zone 12, and the contents of the first zone including the combustion reaction products as well as uncombusted fuel, if any, flow downstream from first zone 12 through second zone 13.

Flames generated in first combustion zone 12 extend downstream towards second combustion zone 13 as a flame front which is not uniform, containing peak flame temperatures which are higher than other temperatures across the flame front.

In order to buffer the peak flame temperatures and provide a relatively uniform flame front in second combustion zone 13, the second portion of air is introduced at a location (port 27) and with a velocity (e.g. 5000 ft/min.) (1,524 m/min.) for accomplishing these purposes. The resulting uniform flame front, in which peak flame temperatures have been buffered, is indicated at 42 in Fig. 2. The minimum velocity of the second portion of air should be about 2,500 ft/min. (762 m/min.) in order to produce these results.

The gases moving through second combustion zone 13 include sulfur dioxide. In order to convert the sulfur dioxide to calcium sulfate, finely divided limestone particles are introduced into second zone 13 together with and under the urging of the second portion of air. As shown in Fig. 2, a stream of limestone particles 33 enters second combustion zone 13 at the downstream open end 29 of pipe 28. The second portion of air entering second combustion zone 13 at port 27 distributes the limestone particles throughout the gases flowing downstream through the second zone. The limestone particles entering the second zone are flash calcined downstream of first zone 12 to produce particles of lime which reacts with at least part of any sulfur dioxide present, in the presence of oxygen from that part of the air which is in excess of that stochiometrically required to react with the fuel, to produce calcium sulfate.

The contents of second combustion zone 13 are flowed downstream away from the first and second combustion zones 12, 13.

The average temperature in first combustion zone 12 exceeds the sintering temperature of the limestone and lime particles (1316°C or 2400°F). The location and velocity of the second portion of air is such as to provide an average processing temperature range, downstream of first combustion zone 12 which is below the sintering temperature for the limestone and lime particles as well as being below the temperature at which calcium sulfate decomposes into lime and gaseous oxides of sulfur (1349°C or 2460°F). Sintering is undesirable because it decreases the surface area of the resulting lime particles which reduces the reactivity thereof. Therefore, the temperature in second zone 13 and downstream from there is high enough for flash calcination of the finely divided limestone particles but low enough to avoid sintering of the resulting lime particles.

The average processing temperature range is about 1600°-2400°F (871°-1316°C). This is high enough and prevails long enough for the lime, produced downstream of first combustion zone 12, to react with a desired amount of sulfur dioxide gas during the time in which the lime and the sulfur dioxide gas are subjected to that temperature range. The lime and sulfur dioxide gas are subjected to the average processing temperature range for more than 0.5 seconds, preferably at least 1.5 seconds. The limestone particles are flash calcined to particles of lime in less than 0.1 second, so that the rest of the time during which the particles are subjected to the temperature range 1600°-2400°F (871°-1316°C) is time in which a reaction with sulfur dioxide can occur. Below 1600°F (871°C) the reactions which convert sulfur dioxide to calcium sulfate are too slow to be practicable. The length of time in which sulfur dioxide and lime are subjected to the desired average processing temperature range of 1600°-2400°F (871°-1316°C) can be increased by reducing the amount of excess air (e.g. from 3% to 1.5%), by reducing the rate at which steam is generated (i.e. the rate at which heat is exchanged through the walls 24 of combustion chamber 12 or superheaters 35 and 36), by reducing the velocity of the gases flowing downstream from the combustion chamber, etc.

As noted above, the limestone particles introduced into second combustion zone 13 are transported up to the combustion zone by the transport gas from conduit 32. Before entering second combustion zone 13, the limestone particles have imparted thereto by the transport gas a velocity sufficient to carry the limestone particles up to the second zone but intentionally insufficient to distribute the limestone particles across the second zone. This minimizes the amount of air introduced into pipe 28 and thereby the amount of extraneous air introduced into the combustion chamber, an advantage which will be discussed more fully below.

Distribution of the limestone particles across the second zone is accomplished by the high velocity air introduced at port 27. This air has a velocity which not only buffers the flames from first combustion zone 12 but also aspirates the limestone particles into, and distributes them across, the second zone. Referring to Fig. 2, distribution is enhanced by the turbulence 43 caused at least in part when the high velocity second portion of air is directed laterally across the second zone.

In a preferred embodiment, the limestone particles are carried up to second zone 13, i.e. up to open end 29 in pipe 28, under dense phase transport. This is accomplished by mixing the limestone particles entering pipe 28 from conduit 31 with transporting air in an amount which imparts dense phase transport. The minimum solids to gas ratio for dense phase transport is about 20 to 1, and a typical ratio employed in accordance with the present invention is about 90 to 1. The minimum velocity required to provide a dense phase transport of limestone particles having a maximum particle size of minus 100 mesh on a wet screen basis is about 300 ft/min. (91 m/min.). A typical gas pressure in conduit 32 is 15-30 psig (103.5-207 kPa).

The term "wet screen basis" reflects the fact that the limestone particles have been subjected to water before screening, and this enables the screening out of particles which have undergone agglomeration as a result of being subjected to water.

The velocity with which the limestone particles are conveyed through pipe 28 to open pipe end 29 can vary over a wide range, e.g. 300 ft/min (91 m/min.) to 10,000 ft/min. (3,048 m/min.), with little effect on the limestone particle distribution in zone 13. This is because the tertiary air introduced at port 27, typically at a velocity of 5,000 ft/min (1524 m/min.), performs the totality of the limestone particles distribution function in zone 13, and this is so even when the velocity in pipe 28 is 10,000 ft/min. (3,048 m/min.). The velocity of the particles in pipe 28 plays virtually no role in the distribution of limestone particles in zone 13. The relative volume of air moving through pipe 28 is insubstantial compared to the volume of tertiary air entering zone 13 at port 27, no matter the velocity in pipe 28. Although not apparent from the drawing, in which the diameter of pipe 28 is exaggerated for illustrative purposes, the cross-sectional area of elements 25-27, through which the tertiary air is transported, is very much greater than that of pipe 28. Typically, there are six tertiary air ports 27 each having a diameter of about 9 inches (229 mm) while there are only four pipes 28 each having a diameter of 1.5 inches (38 mm). The total cross-sectional area of the latter is less than 2% of the total cross-sectional area of the former. Accordingly, one may employ a velocity in pipe 28 a low as possible, e.g. merely enough to provide dense phase transport, and it will make essentially no difference from the standpoint of particle distribution in zone 13, compared to the distribution obtained when employing a greater velocity in pipe 28.

Substantially no extraneous air is employed for introducing and distributing the limestone particles into the combustion chamber. This is because the second portion of air, which performs the limestone-introduction and distribution functions at port 27 was normally employed for combustion purposes in the absence of limestone injection. As used herein, "extraneous" air refers to air in addition to that normally employed for combustion purposes. The amount of air used for dense phase transport of the limestone particles in pipe 28 is insignificant compared to the combined major and second air portions introduced at nozzles 16-18, ports 21-23 and port 27. Because essentially all the air introduced into the combustion chamber is no more than just that amount of air which is normally introduced for combustion purposes, there is a minimization, if not a total elimination, of any adverse effect the introduction of the limestone particles under the urging of air could have on the steam generating capabilities of the fuel and combustion air, a drawback which could occur if extraneous air were used.

As noted above, there is no premixing of the limestone particles with the second portion of combustion air before they enter second combustion zone 13 at 27 and 29 respectively. Therefore, the second portion of combustion air may be introduced into second zone 13 at whatever high velocity is necessary to provide the desired buffering, turbulence and particle mixing and distributing effects. There are no erosion or plugging problems in conduit 25, extension 26 or ports 27 because no limestone particles flow therethrough. The velocity and volume of combustion air introduced at ports 27 is undicated by limestone transporting considerations.

The limestone particles move through conduit 28 in dense phase transport at a relatively very slow speed, e.g. about 360 ft/min. (110 m/min.), for example. At such low speeds, there is relatively no erosion in pipe 28, and the likelihood of plugging in pipe 28 is reduced substantially. The likelihood of plugging increases with the speed of particle travel. The velocity of the second air portion is 2500-5,000 ft/min. (762-1524 m/min), so that the speed of particle travel in conduit 25 would be much faster than in pipe 28, thereby substantially increasing the likelihood of pluggage if there were premixing.

When the limestone particles move in dense phase transport, e.g. at a ratio of solids to gas of 90-100 to 1 or higher, the stream of limestone particles may be very accurately divided into substreams merely by controlling the cross-sectional area of the substream conduits. For example, a stream in dense phase transport may be divided into two equal substreams by providing the two substream conduits with equal cross-sectional areas. This feature is not available with dilute phase transport.

As noted above, a factor which effects the conversion of sulfur dioxide to calcium sulfate is the reactivity of the lime particles. The greater the surface area of lime, the greater the reactivity. In accordance with the present invention, the desired amount of surface area is provided by supplying limestone particles smaller than 100 mesh (less than 150 microns) on a wet screen basis. Preferably, the limestone particles have a size, in the range between about 5 microns and minus 100 mesh, on a wet screen basis, sufficient to provide the reaction required to eliminate the sulfur dioxide gas to the extent required. Typically, the limestone particles comprise about 70% smaller than 200 mesh (less than 75 microns), on a wet screen basis.

If sufficient reactivity is not obtained for a given limestone particle size, reactivity may be increased by reducing the particle size, all other factors being constant. Reducing the particle size increases the surface area of the lime and results in a better distribution of the particles, but it also increases the expense. Typically, one employs the coarsest particle size, in the range of about 5 microns to minus 100 mesh, that will give the desired amount of SO₂ removal.

The amount of limestone injected depends upon the amount of sulfur dioxide which has to be converted to calcium sulfate and this depends upon the initial and final desired sulfur dioxide contents of the flue gases. Generally speaking, an increase in the calcium to sulfur ratio increases the sulfur dioxide removal efficiency, although not on a linear basis.

Although the second portion of air entering second combustion zone 13 at port 27 has been preheated, it is relatively cool compared to the temperatures of the gas entering zone 13 from zone 12. The limestone particles enter the second zone within the stream of air constituting the second air portion.

As previously noted, there are peak temperatures, in the contents of the first zone flowing downstream toward the second zone, which are high enough to cause sintering of the limestone particles. The second portion of air, entering through port 27, cushions the limestone particles from the peak temperatures described in the preceding sentence to prevent sintering of the limestone particles.

There are other advantages to injecting limestone into the combustion chamber of the boiler, in addition to those described above. During operation of a boiler, deposits of soot, etc. normally form on the inside surface of the boiler walls, e.g. at second combustion zone 13. It is conventional practice to remove these deposits by employing a procedure known as soot blowing wherein steam is blown through the boiler, and this cleans off the deposits. This procedure is employed periodically during operation of the boiler (e.g. for one-half to one hour, three to six times per day). When limestone is injected into zone 13 at 27, some of the lime formed in zone 13 is unavoidably incorporated into the deposits. Lime makes the deposits more friable and easier to clean off.

Moreover, as the deposits are being removed from the boiler walls by soot blowing, lime is being introduced from the deposits, into second combustion zone 13 and above, resulting in a lowering of the SO₂ content because of the reaction between the SO₂ and the lime from the cleaned-off deposits. SO₂ removal is increased by 5-10% (on a 100% basis) during soot blowing. In other words, if the SO₂ is 40% removed before soot blowing, then it will be 45-50% removed during soot blowing. This enables one to reduce the limestone injected at 29 during the soot blowing period without a corresponding reduction in SO₂ removal.

Furthermore, during periods when limestone injection at 29 is temporarily suspended, SO₂ removal will continue because of the lime content of the deposits on the inside surface of the boiler walls. More particularly, SO₂ is absorbed into the deposits and reacts with the lime therein to form calcium sulfate (CaSO₄) there. This can continue for up to 3 days, with decreasing SO₂ removal, starting at about 5-7% SO₂ removal at the beginning of the shut down period for limestone injection. Therefore, should there be a need to shut down the limestone injecting apparatus, e.g. for maintenance, servicing or the like, SO₂ removal will continue for awhile, at least to some extent.

One should control soot blowing during the period when limestone injection is shut down, to retain the deposits or parts thereof, and their SO₂-absorbing function, during that period. For example, after SO₂ absorption into a deposit has occurred for awhile, there will be a buildup of calcium sulfate in an outer layer of the deposit. Soot blowing of reduced longevity, sufficient to remove only this outer layer and expose a fresh outer layer devoid of calcium sulfate would then be desirable. It would be undesirable to remove the entire deposit in one soot blowing operation. When the SO₂-absorbing properties of the innermost layer of the deposits has been depleted, removal of the deposits can be completed, with soot blowing.

Another advantage arising from limestone injection is the elimination of acids from the entire boiler system, both the combustion chamber and downstream components. Acids can form as a result of the combustion reaction. These acids include primarily sulfuric acid but also hydrochloric and nitric acids. Acids are undesirable because, if they precipitate out of the flue gases somewhere in the system, they can severely corrode the system's components, among other things. It has been conventional in the past to operate the boiler system in such a manner as to produce a flue gas exhaust temperature above the dew point of the acids, e.g. a stack exhaust temperature in the range 300°-350°F (148°-177°C). This prevents the acids from precipitating out of the flue gases anywhere in the system, but it is accomplished at the expense of heat utilization elsewhere, e.g. for generating steam.

Limestone injection forms lime which neutralizes the acids. Therefore, acid precipitation from the flue gases is not a problem, and one need not maintain the flue gases at an exhaust temperature above the dew point of the acids. As a result, the system can be operated with a lower stack exhaust temperature, e.g. 110°-250°F (43°-121°C), and more heat can be extracted from the flue gases to generate steam.

The foregoing detailed description has been given for clearness of understanding only, and no unnecessary limitations should be understood therefrom, as modifications will be obvious to those skilled in the art.

## Claims

1. A combustion process
wherein a sulfur-containing fuel and combustion air are introduced into a first combustion zone of a combustion chamber and produce downstream-flowing combustion reaction gases containing sulphur dioxide (SO₂)
wherein finely divided particles of a material calcineable into lime are introduced through an entry means into a second combustion zone of said chamber, downstream of said first zone, in sufficient amount to reduce substantially the SO₂ content of said combustion reaction gases,
wherein said particles are calcined, downstream of said first zone, into lime (CaO) which reacts with at least part of any SO₂ present to produce calcium sulphate (CaSO₄) in said chamber, and
wherein said process further comprises:
transporting a mixture of said particles and transport air up to said entry means under a dense phase transport in which the ratio of solids to gas is at least about 20 to 1, said transport air being incapable of distributing said particles across said zone;
and then adding to said mixture at said entry means an additional air volume, not employed in said dense phase transport, to introduce said particles into said second zone and to distribute the particles across said second zone, said additional air volume being overfire combustion air;
the process being provided for limiting the amount of extraneous air introduced with said particles to an amount which is insignificant compared to the rest of the air introduced into said zones.

2. A combustion process as recited in Claim 1 wherein: no air is introduced into said chamber downstream of said entry means to the second zone.

3. A combustion process as recited in Claim 1 or 2 wherein: overfire combustion air is the sole additional volume of air employed for introducing particles of said material into said chamber.

4. A combustion process as recited in Claim 1 wherein said transporting step comprises:
imparting to said particles a velocity sufficient to flow the particles up to said location but insufficient to distribute the particles across the second zone; and said additonal air volume imparts to said particles a velocity sufficient to distribute the particles across the second zone.

5. A combustion apparatus comprising:
means defining a combustion chamber (11) having a first combustion zone (12) and second zone (13) downstream of said first zone (12);
means (15-23) for introducing a sulfur-containing fuel and combustion air into said first zone;
means, including a first conduit (28), for transporting a mixture of finely divided particles and a transport gas, under a two phase transport, up to an entry means (29) for introducing said mixture into said second zone (13);
and means (25-27) for adding to said mixture, at said entry means (29), an additional air volume, not employed in said two phase transport, to introduce said particles into said second zone and to distribute said particles across said second zone;
characterized in that
said two phase transport is a dense phase transport in which the ratio of solids to gas is at least about 20 to 1,
said second zone is a combustion zone (13),
said additional air volume is overfire combustion air and
said apparatus is provided for limiting the amount of extraneous air introduced with said particles to an amount which is insignificant compared to the rest of the air introduced into said zones.

6. A combustion apparatus as recited in Claim 5 wherein:
said means for adding additional gas volume to said mixture comprises second conduit means, for introducing overfire combustion air into said second zone.

7. A combustion apparatus as recited in Claim 6 wherein:
said means for introducing said overfire combustion air is the sole means for adding said additonal gas volume to said mixture.

8. A combustion apparatus as recited in Claim 6 wherein:
said second conduit means surrounds said first conduit means at said entry means.

9. A combustion apparatus as recited in Claim 5 or 8 wherein:
said first conduit terminates at an untapered downstream end (29).

## Patentansprüche

1. Ein Verbrennungsprozeß,
wobei ein schwefelhaltiger Brennstoff und Verbrennungsluft in eine erste Verbrennungszone einer Verbrennungskammer eingeführt werden und stromabwärts strömende Verbrennungsreaktionsgase produzieren, die Schwefeldioxid (SO₂) enthalten,
wobei feinverteilte Partikel eines zu Calciumoxid brennbaren Materials durch ein Eintrittsmittel in eine zweite Verbrennungszone besagter Kammer, stromabwärts besagter erster Zone, in ausreichender Menge eingeführt werden, um den SO₂-Gehalt besagter Verbrennungsreaktionsgase wesentlich zu reduzieren,
wobei besagte Partikel, stromabwärts besagter ersten Zone, zu Calciumoxid (CaO) gebrannt werden, das mit wenigstens einem Teil des vorhandenen SO₂ reagiert, um Calciumsulfat (CaSO₄) in besagter Kammer zu produzieren, und
wobei besagter Prozeß weiterhin umfaßt:
Fördern einer Mischung besagter Partikel und Trägerluft hinauf zu besagtem Eintrittsmittel unter einer Dichtphasenförderung, bei der das Verhältnis von Feststoffen zu Gas mindestens etwa 20:1 beträgt, wobei besagte Trägerluft nicht im Stande ist, besagte Partikel über besagte Zone zu verteilen;
und dann Zugeben eines zusätzlichen Luftvolumens zu besagter Mischung an besagtem Eintrittsmittel, das nicht in besagter Dichtphasenförderung verwendet wird, um besagte Partikel in besagte zweite Zone einzuführen und um die Partikel über besagte zweite Zone zu verteilen, wobei besagtes zusätzliche Luftvolumen Feuerungszweitluft ist;
wobei der Prozeß vorgesehen ist, um die Menge an mit besagten Partikeln eingeführter Fremdluft auf eine Menge zu begrenzen, die verglichen mit dem Rest der in besagte Zonen eingeführten Luft unwesentlich ist.

2. Ein Verbrennungsprozeß wie in Anspruch 1 beschrieben, wobei: keine Luft in besagte Kammer stromabwärts besagten Eintrittsmittels zur zweiten Zone eingeführt wird.

3. Ein Verbrennungsprozeß wie in Anspruch 1 oder 2 beschrieben, wobei:
Feuerungszweitluft das einzige zusätzliche Luftvolumen darstellt, das zum Einführen von Partikeln besagten Materials in besagte Kammer verwendet wird.

4. Ein Verbrennungsprozeß wie in Anspruch 1 beschrieben, wobei besagter Förderschritt umfaßt:
besagten Partikeln eine Geschwindigkeit zu verleihen, die ausreicht, um die Partikel zu besagter Stelle hochzuwirbeln, aber nicht ausreicht, um die Partikel über die zweite Zone zu verteilen;
und besagtes zusätzliche Luftvolumen verleiht besagten Partikeln eine Geschwindigkeit, die ausreicht, um die Partikel über die zweite Zone zu verteilen.

5. Eine Verbrennungsvorrichtung umfassend:
Mittel, die eine Verbrennungskammer (11) mit einer ersten Verbrennungszone (12) und einer zweiten Verbrennungszone (13) stromabwärts besagter ersten Zone (12) definieren;
Mittel (15 - 23) zum Einführen eines schwefelhaltigen Brennstoffes und Verbrennungsluft in besagte erste Zone;
Mittel, die eine erste Leitung (28) einschließen, zum Fördern einer Mischung von feinverteilten Partikeln und einem Trägergas, unter einer Zweiphasenförderung, hoch zu einem Eintrittsmittel (29), um besagte Mischung in besagte zweite Zone (13) einzuführen;
und Mittel (25 - 27), um zu besagter Mischung, an besagtem Eintrittsmittel (29), ein zusätzliches Luftvolumen, das nicht in besagter Zweiphasenförderung verwendet wird, zuzugeben, um besagte Partikel in besagte zweite Zone einzuführen und besagte Partikel über besagte zweite Zone zu verteilen;
dadurch gekennzeichnet, daß
besagte Zweiphasenförderung eine Dichtphasenförderung darstellt, bei der das Verhältnis von Feststoffen zu Gas mindestens etwa 20 zu 1 beträgt,
besagte zweite Zone eine Verbrennungszone (13) darstellt,
besagtes zusätzliche Luftvolumen Feuerungszweitluft darstellt und
besagte Vorrichtung vorgesehen ist, um die Menge von mit besagten Partikeln eingeführter Fremdluft auf eine Menge zu begrenzen, die unwesentlich ist verglichen mit dem Rest der in besagte Zonen eingeführten Luft.

6. Eine Verbrennungsvorrichtung wie in Anspruch 5 beschrieben, wobei:
besagtes Mittel zum Zugeben besagten zusätzlichen Gasvolumens zu besagter Mischung ein zweites Leitungsmittel umfaßt, um Feuerungszweitluft in besagte zweite Zone einzuführen.

7. Eine Verbrennungsvorrichtung wie in Anspruch 6 beschrieben, wobei besagtes Mittel zum Einführen besagter Feuerungszweitluft das einzige Mittel ist, um besagtes zusätzliches Gasvolumen zu besagter Mischung zuzugeben.

8. Eine Verbrennungsvorrichtung wie in Anspruch 6 beschrieben, wobei besagtes zweite Leitungsmittel besagtes erste Leitungsmittel an besagtem Eintrittsmittel umgibt.

9. Eine Verbrennungsvorrichtung wie in Anspruch 5 oder 8 beschrieben, wobei:
besagte erste Leitung an einem nicht verjüngten stromabwärtigen Ende (29) endet.

## Revendications

1. Procédé de combustion,
dans lequel un combustible contenant du soufre et de l'air de combustion sont introduits dans une première région de combustion d'une chambre de combustion et produisent des gaz de réaction de combustion s'écoulant en aval et contenant du dioxyde de soufre (SO₂),
dans lequel des particules finement divisées d'un matériau pouvant être calciné pour donner de la chaux sont introduites par un moyen d'entrée dans une seconde région de combustion de ladite chambre de combustion, en aval de ladite première région, en quantité suffisante pour réduire sensiblement le SO₂ contenu dans lesdits gaz de réaction de combustion,
dans lequel lesdites particules sont calcinées en aval de ladite première région pour donner de la chaux (CaO) qui réagit avec une partie au moins du SO₂ présent pour produire du sulfate de calcium (CaSO₄) dans ladite chambre, et
sachant que ledit procédé comprend en outre :
- le fait d'acheminer un mélange desdites particules et d'air de transport jusqu'audit moyen d'entrée dans des conditions de transport en phase dense dans lesquelles le rapport des solides par rapport aux gaz est d'au moins environ 20 pour 1, ledit air de transport étant incapable de répartir lesdites particules dans ladite région, et
- le fait d'ajouter ensuite audit mélange, au niveau dudit moyen d'entrée, un volume d'air supplémentaire non utilisé dans ledit transport en phase dense, pour introduire lesdites particules dans ladite seconde région et répartir les particules dans ladite seconde région, ledit volume d'air supplémentaire étant de l'air de sur-combustion, ledit procédé servant à limiter la quantité d'air étranger introduit avec lesdites particules à une valeur qui est insignifiante par rapport au reste de l'air introduit dans lesdites régions.

2. Procédé de combustion selon la revendication 1, dans lequel aucun air n'est introduit dans ladite chambre en aval dudit moyen d'entrée dans ladite seconde région.

3. Procédé de combustion selon la revendication 1 ou 2, dans lequel l'air de sur-combustion est le seul volume additionnel d'air utilisé pour introduire des particules dudit matériau dans ladite chambre.

4. Procédé de combustion selon la revendication 1, dans lequel ladite étape d'acheminement comprend le fait d'impartir auxdites particules une vitesse suffisante pour faire écouler les particules jusqu'audit emplacement mais insuffisante pour répartir les particules dans la seconde région et ledit volume additionnel d'air impartit auxdites particules une vitesse suffisante pour répartir les particules dans la seconde région.

5. Appareil de combustion comprenant :
- des moyens qui définissent une chambre de combustion (11) qui comprend une première région de combustion (12) et une seconde région (13) en aval de ladite première région (12),
- des moyens (15-23) pour introduire un combustible contenant du soufre et de l'air de combustion dans ladite première région,
- des moyens, incluant un premier conduit (28), pour acheminer un mélange de particules finement divisées et un gaz de transport, dans des conditions de transport à deux phases, jusqu'à un moyen d'entrée (29) afin d'introduire ledit mélange dans ladite seconde région (13), et
- des moyens (25-27) pour ajouter audit mélange, au niveau dudit moyen d'entrée (29), un volume d'air additionnel, non utilisé dans ledit transport à deux phases, afin d'introduire lesdites particules dans ladite seconde région et de répartir lesdites particules dans ladite seconde région ,
caractérisé en ce que :
- ledit transport à deux phases est un transport en phase dense dans lequel le rapport des solides par rapport aux gaz est d'au moins environ 20 pour 1,
- ladite seconde région est une région de combustion (13),
- ledit volume d'air additionnel est de l'air l'air de sur-combustion, et
- ledit appareil sert à limiter la quantité d'air étranger introduit avec lesdites particules à une valeur qui est insignifiante par rapport au reste de l'air introduit dans lesdites régions.

6. Appareil de combustion selon la revendication 5, dans lequel ledit moyen pour ajouter un volume d'air additionnel audit mélange comprend un second conduit pour introduire de l'air de sur-combustion dans ladite seconde région.

7. Appareil de combustion selon la revendication 6, dans lequel ledit moyen pour introduire ledit air de sur-combustion est le seul moyen pour ajouter ledit volume d'air additionnel audit mélange.

8. Appareil de combustion selon la revendication 6, dans lequel ledit second conduit entoure ledit premier conduit au niveau dudit moyen d'entrée.

9. Appareil de combustion selon la revendication 5 ou 8, dans lequel ledit premier conduit se termine en une extrémité aval (29) non effilée.
